Europäisches Patentamt

European Patent Office

Office européen des brevets

(19)

(11) Veröffentlichungsnummer: **0 243 428**
**B1**

(12) **EUROPÄISCHE PATENTSCHRIFT**

(45) Veröffentlichungstag der Patentschrift:
20.09.89

(21) Anmeldenummer: 86906319.8

(22) Anmeldetag: 22.10.86

(86) Internationale Anmeldenummer:
PCT/EP 86/00608

(87) Internationale Veröffentlichungsnummer:
WO/8702749 (07.05.87 Gazette 87/10)

(51) Int. Cl.⁴: **F 16 K 25/00**, C 04 B 41/50

(54) GEGENEINANDER ABDICHTENDE VENTILELEMENTE FÜR MISCHARMATUREN.

(30) Priorität: 28.10.85 DE 3538261

(43) Veröffentlichungstag der Anmeldung:
04.11.87 Patentblatt 87/45

(45) Bekanntmachung des Hinweises auf die Patenterteilung: 20.09.89 Patentblatt 89/38

(84) Benannte Vertragsstaaten:
AT BE CH DE FR GB IT LI LU NL SE

(56) Entgegenhaltungen:
EP--A-- 0 166 708
WO--A--86 /046 58
DE--A-- 2 834 146
DE--C-- 3 421 739
GB--A-- 1 582 231
US--A-- 4 060 660
US--A-- 4 504 519
Chemical Abstracts, no. 20, May 1979, Columbus
Ohio (US) V.E. Strel'nitskii et al.: "Some properties of
diamond-like carbon coatings produced by condensation of matter from a plasma phase", page 225,
abstract 155883x, &Pis'ma Zh.Tekh. Fiz.1978, 4(22),
1355-8 (Russ.)
Chemical Abstracts, vol. 103, no. 26, December 1985,
Columbus, Ohio (US), see page 287, abstract 219824
a, & JP-A-60122785 (MITSUBISHI METAL CORP.) 1st
July 1985

(73) Patentinhaber: Battelle-Institut e.V.
Am Römerhof 35 Postfach 900 160
D-6000 Frankfurt/Main 90 (DE)

(72) Erfinder: ETZKORN, Heinz-Werner
Schumannstrasse 16
D-6392 Neu-Anspach (DE)
Erfinder: RONGE, Werner
Moselstrasse 6
D-6082 Walldorf (DE)

## Beschreibung

Bei sanitären Mischventilen erfolgt die Wasserführung im allgemeinen durch zwei oder drei parallel zueinanderliegenden gegeneinander abdichtende Ventilscheiben aus Keramik. Durch Verschiebung einer der Ventilscheiben relativ zu den anderen, was z. B. per Hand mittels einer Hebelsteuerung bewirkt werden kann, wird die Kalt- und Warmwassermenge geregelt.

Immer dann, wenn die relativ zueinander zu verschiebenden Scheiben aus demselben Material bestehen, liegt ein tribologisch ungünstiges System vor. Zur Verbesserung des tribologischen Systems und Verlängerung der Lebensdauer wurde daher vorgeschlagen, eine der Scheiben aus einem anderen Material, z. B. aus Siliziumcarbid, anzufertigen. Scheiben aus Siliziumcarbid sind jedoch kostenaufwendig.

Zur Reduzierung des Reibungskoeffizienten der Ventilscheiben ist bekannt, Schmieröle oder -fette zu verwenden. Der Fettfilm verbraucht sich jedoch beim fortschreitenden Gebrauch der Armatur. Ein Nachfetten ist ohne Demontage der Armatur nicht möglich. Außerdem sind hierfür einsetzbare Schmiermittel gegen aggressive Flüssigkeiten, wie Laugen oder Säuren, nicht stabil, so daß die Verwendung nur auf Warm- und Kaltwasser-Mischventilen beschränkt ist.

Die DE-A-28 34 146 beschreibt ein Ventilelement mit einer Abdichtfläche, die mit einer geeigneten Beschichtung versehen ist, um eine Härtung der Oberfläche zu erzielen. Eine Verringerung des Reibungswertes der Oberfläche wird dort aber nicht angestrebt.

Die US-A-4 504 519 beschreibt ein Verfahren zur Herstellung einer diamantartigen, harten Kohlenstoffschicht, wobei ein zu beschichtender Gegenstand in einer Vakuumkammer angeordnet wird, die anschließend evakuiert wird. In die Kammer ragen Elektroden, an die eine geeignete Spannung angelegt wird. Die Abscheidung erfolgt in Anwesenheit eines Kohlenwasserstoffgases. Es wurde eine Beschichtung zwischen 0,08 und 1,50 $\mu$m hergestellt. Es wird vermutet, daß die nach diesem bekannten Verfahren hergestellten Beschichtungen nicht für Abdichtflächen von Ventilelementen geeignet sind, insbesondere weil sie den im Betrieb auftretenden Belastungen, insbesondere Spannungen, nicht ausreichend lange standhalten.

Der Erfindung liegt daher die Aufgabe zugrunde, ein Verfahren vorzuschlagen, mit dem wirksam eine Abdichtfläche eines Ventilelements mit einer diamantartigen, harten Kohlenstoffschicht mit niedrigem Reibungskoeffizienten versehen werden kann.

Die Erfindung besteht in der Anwendung eines Verfahrens zur Herstellung einer diamantartigen, Harten Kohlenstoffschicht mit niedrigem Reibungskoeffizienten, wobei ein Kohlenwasserstoffgas oder eine Mischung von Kohlenwasserstoffgasen und reiner Wasserstoff auf ein zu beschichtendes, sich auf Raumtemperatur befindliches Substrat geleitet wird, um das durch Hochfrequenzanregung eine sauerstoffreie Plasmaentladung im Vakuum erzeugt wird, die von den zugeleiteten Gasen getragen wird, und die Gase von der Plasmaentladung angeregt, dissoziiert, ionisiert und auf das Substrat beschleunigt werden, auf die Beschichtung einer Abdichtfläche wenigstens eines Ventilelements, wobei die Schichtdicke 0,5 bis 5,0 $\mu$m beträgt.

Das erfindungsgemäße Verfahren wird insbesondere auf die Beschichtung der Abdichtfläche wenigstens eines Ventilelementes einer Mischarmatur angewendet, insbesondere einer Sanitär-Mischarmatur.

Besonders gute Ergebnisse werden erzielt, wenn die Schichtdicke 1 bis 2 $\mu$m beträgt.

Weiterhin wird die Anwendung des erfindungsgemäßen Verfahrens auf die Beschichtung einer Keramikscheibe, vorzugsweise aus Aluminiumoxid, oder auf die Beschichtung einer Metallscheibe angewendet.

Diese wird im folgenden anhand eines Beispiels näher erläutert.

Die Plasmaentladung erfolgt beim Beschichten von Keramikscheiben mit einer Spannung von z. B. 600 Volt. Es wird eine Hochfrequenzanregung im Kilo- bis Megahertzbereich, z. B. bei 13,56 MHz, zur Erzeugung und Aufrechterhaltung der Plasmaentladung benötigt. Als Beschichtungsapparatur eignet sich z. B. eine Diodenanlage, Trioden- oder thermisch gestützte Triodenanlage aber auch magnetfeldgestützte Anlagen.

Die geeignete Schichtdicke beträgt erfindungsgemäß 0,5 bis 5,0 $\mu$m, vorzugsweise 1,0 $\mu$m. Solche Schichten zeigen eine große Härte von mehr als 3.500 HV, einen hohen spezifischen Widerstand von bis $10^{15} \Omega$ cm und einen sehr niedrigen Reibungskoeffizienten.

## Patentansprüche

1. Anwendung eines Verfahrens zur Herstellung einer diamantartigen, harten Kohlenstoffschicht mit niedrigem Reibungskoeffizienten, wobei ein Kohlenwasserstoffgas oder eine Mischung von Kohlenwasserstoffgasen und reiner Wasserstoff auf ein zu beschichtendes, sich auf Raumtemperatur befindliches Substrat geleitet wird, um das durch Hochfrequenzanregung eine sauerstoffreie Plasmaentladung im Vakuum erzeugt wird, die von den zugeleiteten Gasen getragen wird, und die Gase von der Plasmaentladung angeregt, dissoziiert, ionisiert und auf das Substrat beschleunigt werden, auf die Beschichtung einer Abdichtfläche wenigstens eines von gegeneinander abdichtenden Ventilelementen, wobei die Schichtdicke 0,5 bis 5,0 $\mu$m beträgt.

2. Anwendung des Verfahrens nach Anspruch 1 auf die Beschichtung der Abdichtfläche wenigstens eines Ventilelements einer Mischarmatur, insbesondere einer Sanitär-Mischarmatur.

3. Anwendung des Verfahrens nach Anspruch 1 oder 2, wobei die Schichtdicke 1 bis 2 μm beträgt.

4. Anwendung des Verfahrens nach einem der Ansprüche 1 bis 3 auf die Beschichtung einer Keramikscheibe, vorzugsweise aus Aluminiumoxid, oder auf die Beschichtung einer Metallscheibe.

## Claims

1. Application of a method of producing a diamond-like, hard carbon coating of low friction coefficient to coating of a sealing face of at least one of mutually sealing valve components, comprising : passing a hydrocarbon gas or a mixture of hydrocarbon gases and pure hydrogen onto a substrate to be coated that is at room temperature ; generating, by high-frequency excitation, oxygen-free plasma discharge around said substrate in vacuum, said plasma discharge being supported by said gases, and said gases being excited, dissociated and ionised by the plasma discharge and accelerated toward the substrate ; the thickness of the coating ranging from 0.5 to 5.0 μm.

2. Application of the method as claimed in Claim 1 to coating the sealing face of at least one component of a mixing valve, in particular of a sanitary mixing valve.

3. Application of the method as claimed in Claim 1 or Claim 2, wherein the thickness of the coating ranges from 1 to 2 μm.

4. Application of the method as claimed in any of the Claims 1 to 3 to coating of a ceramic washer, preferably made of aluminium oxide, or to coating of a metal washer.

## Revendications

1. Utilisation d'un procédé de préparation d'une couche dure de carbone, de type diamant, à faible coefficient de frottement, en dirigeant un gaz hydrocarboné ou un mélange de gaz hydrocarbonés et d'hydrogène pur sur un substrat à recouvrir, se trouvant à température ambiante, autour duquel est produite une décharge de plasma exempte d'oxygène, par excitation à haute fréquence sous vide, qui est portée par les gaz introduits, et les gaz sont excités par la décharge de plasma, dissociés, ionisés et accélérés sur le substrat pour recouvrir une surface d'étanchéité d'éléments de vanne étanche vis-à-vis des autres, l'épaisseur de couche étant comprise entre 0,5 μm et 5 μm.

2. Utilisation du procédé selon la revendication 1 pour le revêtement de la surface d'étanchéité d'au moins un élément de vanne d'un dispositif de mélange, notamment d'une vanne mélangeuse pour le sanitaire.

3. Utilisation du procédé selon la revendication 1 ou 2, dans lequel l'épaisseur de couche est comprise entre 1 et 2 μm.

4. Utilisation de procédé selon l'une des revendications 1 à 3 pour recouvrir un disque de céramique, de préférence en oxyde d'aluminium, ou pour recouvrir un disque métallique.